(19) Europäisches Patentamt / European Patent Office / Office européen des brevets

(11) **EP 3 814 744 B1**

(12) **EUROPÄISCHE PATENTSCHRIFT**

(45) Veröffentlichungstag und Bekanntmachung des Hinweises auf die Patenterteilung:
**04.01.2023 Patentblatt 2023/01**

(21) Anmeldenummer: **20733199.2**

(22) Anmeldetag: **25.05.2020**

(51) Internationale Patentklassifikation (IPC):
**G01N 15/02** (2006.01)

(52) Gemeinsame Patentklassifikation (CPC):
**G01N 15/0205; G01N 2015/0046**

(86) Internationale Anmeldenummer:
**PCT/EP2020/064419**

(87) Internationale Veröffentlichungsnummer:
**WO 2020/239679 (03.12.2020 Gazette 2020/49)**

(54) **VERFAHREN ZUM BESTIMMEN DER PARTIKELGRÖSSENVERTEILUNG EINES AEROSOLS UND AEROSOL-MESSGERÄT**

METHOD FOR DETERMINING THE PARTICLE SIZE DISTRIBUTION OF AN AEROSOL AND AEROSOL MEASURING DEVICE

PROCEDE DE DETERMINATION DE LA DISTRIBUTION DE LA TAILLE DES PARTICULES D'UN AEROSOL ET APPAREIL DE MESURE D'AEROSOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2019 DE 102019003704**

(43) Veröffentlichungstag der Anmeldung:
**05.05.2021 Patentblatt 2021/18**

(73) Patentinhaber: **Palas GmbH Partikel-und Lasermesstechnik**
**76229 Karlsruhe (DE)**

(72) Erfinder:
• **WEISS, Maximilian**
**76356 Weingarten, Baden-Württemberg (DE)**
• **WEIS, Frederik**
**76131 Karlsruhe, Baden-Württemberg (DE)**
• **GOSSMANN, Ann-Kathrin**
**76137 Karlsruhe, Baden-Württemberg (DE)**

(74) Vertreter: **Lichti - Patentanwälte Partnerschaft mbB**
**Bergwaldstrasse 1**
**76227 Karlsruhe (DE)**

(56) Entgegenhaltungen:
**EP-A2- 2 717 035     DE-A1-102017 001 439**

• **J. B. LILEY: "Fitting Size Distributions to Optical Particle Counter Data", AEROSOL SCIENCE AND TECHNOLOGY., Bd. 17, Nr. 2, 1. Januar 1992 (1992-01-01), Seiten 84-92, XP055736041, US ISSN: 0278-6826, DOI: 10.1080/02786829208959562**

**Beschreibung**

Die Erfindung betrifft ein Verfahren zum Bestimmen der Partikelgrößenverteilung eines Aerosols mittels eines Aerosol-Messgeräts, wobei Aerosol-Partikel des durch eine Messzelle strömenden Aerosols in der Messzelle mit einem Lichtstrahl beleuchtet, Streulicht von einem Sensor aufgenommen und Streulichtsignale der Aerosol-Partikel intensitätsmäßig spektroskopisch erfasst werden, sowie eine für eine Partikelgrößenverteilung repräsentative Größenverteilung der Streulichtsignale erstellt wird.

Ferner betrifft die Erfindung ein Aerosol-Messgerät zur Bestimmung der Partikelgrößenverteilung eines Aerosols, wobei Aerosol-Partikel des Aerosols in einer Messzelle derart angeordnet sind, dass die Aerosol-Partikel von einem Lichtstrahl beleuchtbar sind, wobei Streulicht der Aerosol-Partikel von einem Sensor aufnehmbar und Streulichtsignale der Aerosol-Partikel intensitätsmäßig spektroskopisch erfassbar sind, so dass eine für eine Partikelgrößenverteilung repräsentative Größenverteilung der Streulichtsignale erstellbar ist.

Aus dem Stand der Technik sind gattungsgemäße Verfahren bekannt, mit denen eine Partikelgrößenverteilung von Aerosol-Partikeln eines Aerosols bestimmt wird. Im Sinne der Erfindung bezeichnet Aerosol ein Gemisch aus einem Gas mit festen und/oder flüssigen Schwebeteilchen (Aerosol-Partikel) wie beispielsweise Wassertröpfchen, Rußpartikel, Materialabrieb, Pollen und andere organische und chemische Stoffe. Die Partikelgrößenverteilung bezeichnet die Konzentration der Aerosol-Partikel in Abhängigkeit von deren Partikelgrößen und gibt Aufschluss darüber, wie häufig welche Partikelgrößen im Aerosol vorhanden sind.

J. B. LILEY: "Fitting Size Distributions to Optical Particle Counter Data",AEROSOL SCIENCE AND TECHNOLOGY, Bd. 17, Nr. 2, 1. Januar 1992, Seiten 84-92, offenbart ein Verfahren zum Bestimmen einer Partikelgrößenverteilung eines Aerosols, wobei ein Verfahren zum Anpassen der Dichtefunktionen von allgemein verwendete Junge- und Lognormalverteilungen vorgeschlagen wird.

Mit den gängigen Verfahren kann die Feinstaub-Belastung des Aerosols bestimmt werden. Dabei werden aber stets sämtliche Aerosol-Partikel ungeachtet des Partikeltyps gemessen. Oftmals wirkt sich aber der Einfluss eines oder mehrerer Aerosol-Partikeltypen störend auf die Messergebnisse aus und kann diese verfälschen. Insbesondere werden mit den bekannten Verfahren bei hoher Luftfeuchtigkeit auch Wasserteilchen und/oder durch Wasserkondensat in der Größe veränderte Partikel die Messung verfälscht, also Messfehler verursacht.

Es ist Aufgabe der Erfindung, die Nachteile aus dem Stand der Technik zu beseitigen und ein genaueres Verfahren und eine Vorrichtung zur Bestimmung der Partikelgrößenverteilung eines Aerosols zu entwickeln.

Die Aufgabe wird gelöst mit einem Verfahren mit den Merkmalen des Anspruchs 1, einem Aerosol-Messgerät mit den Merkmalen des Anspruchs 8, einem Computerprogramm mit den Merkmalen des Anspruchs 12 und einem computerlesbaren Medium mit den Merkmalen des Anspruchs 13.

Das erfindungsgemäße Verfahren ist dadurch gekennzeichnet, dass eine bekannte Standard-Partikelgrößenverteilung trockener Aerosol-Partikel an die gemessene Partikelgrößenverteilung angepasst und derart die gemessene Partikelgrößenverteilung von Feuchtigkeitseinflüssen bereinigt wird, und dass nach der Anpassung der Standard-Partikelgrößenverteilung der Gehalt der Wasser-Partikel an den Aerosol-Partikeln aus der angepassten Partikelgrößenverteilung in Kombination mit der gemessenen Partikelgrößenverteilung bestimmt wird. Das erfindungsgemäße Aerosol-Messgerät ist dadurch gekennzeichnet, dass eine Einrichtung des Aerosol-Messgeräts derart ausgestaltet ist, dass eine bekannte Standard-Partikelgrößenverteilung trockener Aerosol-Partikel an die gemessene Partikelgrößenverteilung anpassbar und derart die gemessene Partikelgrößenverteilung von Feuchtigkeitseinflüssen bereinigbar ist, wobei die Einrichtung dazu geeignet ist, die Schritte eines erfindungsgemäßen Verfahrens durchzuführen.

Die Erfindung basiert auf der Grundüberlegung, dass durch die Anpassung der Standard-Partikelgrößenverteilung, die keine oder allenfalls vernachlässigbare Feuchtigkeitseinflüsse aufweist, an die gemessene Partikelgrößenverteilung die Feuchtigkeitseinflüsse weitgehend herausgerechnet werden können und auf diesem Weg insbesondere eine zuverlässige Aussage über die Feinstaub-Belastung des zu messenden Aerosols getroffen werden kann.

Vorzugsweise erfolgt die Anpassung der Standard-Partikelgrößenverteilung an die gemessene Partikelgrößenverteilung nur für Partikelgrößen innerhalb eines Anpassungsintervalls. Besonders vorzugsweise umfasst das Anpassungsintervall Partikelgrößen mit Durchmessern bis maximal 3 pm. Funktionell dient das Anpassungsintervall als Stützstelle für die Anpassung der Standard-Partikelgrößenverteilung an die gemessene Partikelgrößenverteilung. In diesem Bereich sind insbesondere die Feuchtigkeitseinflüsse auf die Partikelgrößenverteilung vernachlässigbar, was eine präzisere Anpassung erlaubt.

Insbesondere können Werte der Partikelgrößenverteilung für Partikelgrößen innerhalb eines Ziel-Größenintervalls bereitgestellt werden, das vorzugsweise Partikeldurchmesser bis maximal 50 pm, besonders vorzugsweise bis maximal 20 und insbesondere bis 15 pm umfasst. Dieser Bereich weist regelmäßig einen nennenswerten Feuchtigkeitseinfluss auf die gemessene Partikelgrößenverteilung auf und ist auch für die Beurteilung der Feinstaub-Belastung des Aerosols von Interesse.

Besonders vorzugsweise werden die Standard-Partikelgrößenverteilungen aus bereits gemessenen Partikelgrößenverteilungen bestimmt, die insbesondere an dem gleichen Ort durchgeführt worden, an dem auch das erfindungsgemäße Verfahren durchgeführt wird. Zur bereits beschriebenen Kompensation der Feuchtigkeitseinflüsse auf die gemessene Partikelgrößenverteilung können die bereits gemessenen Partikelgrößenverteilungen zu solchen Zeiten gemessen worden sein, an denen die Konzentration von Wasser-Partikeln im Aerosol vernachlässigbar war, also bei trockenem Wetter mit geringer Luftfeuchtigkeit, beispielsweise bei einer relativen Luftfeuchtigkeit von bis zu 60%.

Weiter vorzugsweise ist die Standard-Partikelgrößenverteilung eine mathematische modellierte Partikelgrößenverteilung, die insbesondere abhängig ist von einer Potenz $\gamma$ des Partikeldurchmessers $d_p$, wobei insbesondere die Potenz $\gamma$ einen Wert zwischen -10 und -0,1 aufweist. Es gilt damit insbesondere $c_n' = f(d_p^\gamma)$. Ein Beispiel einer derartigen Partikelgrößenverteilung ist bekannt als Junge-Verteilung, die die Partikelgrößenverteilung eines wasserfreien Aerosols modelliert beschreibt und die mathematisch ausgedrückt werden kann durch

$$\frac{dc_n}{d\log r} = r^{-\nu} \qquad ,$$

wobei r dem Partikelradius, also dem halben Partikeldurchmesser entspricht.

Die Standard-Partikelgrößenverteilung kann beispielsweise im Anpassungsintervall insbesondere durch eine Variation ihrer Parameter an die gemessene Partikelgrößenverteilung angepasst werden. Mathematisch wird dies als Anfitten bzw. Fitting bezeichnet. Die Anpassung erfolgt solange, bis ein Fehlerparameter, beispielsweise der RMS-Fehler (root mean square) oder QMW-Fehler (quadratischer Mittelwertfehler), minimiert wird. Hierdurch wird eine angepasste Partikelgrößenverteilung erhalten, die bestmöglich an die gemessene Konzentrationsverteilung angefittet ist. Die angepasste Partikelgrößenverteilung kann anschließend für Partikeldurchmesser innerhalb des Ziel-Größenintervalls extrapoliert werden.

Aus der angepassten Partikelgrößenverteilung kann insbesondere in Kombination mit der gemessenen Partikelgrößenverteilung ein Parameter berechnet werden, der einer Massefraktion der Aerosol-Partikel am Aerosol entspricht. Vorzugsweise kann der Parameter einer Volumenfraktion der Aerosol-Partikel entsprechen. Besonders bevorzugt kann der $PM_{10}$-Wert als ein solcher Parameter für die Massefraktion berechnet werden. Der $PM_{10}$-Wert entspricht dem Anteil der Aerosol-Partikel mit einem Durchmesser von kleiner als 10 pm am Aerosol. Diese Aeorosol-Partikel sind inhalierbar. In entsprechender Weise kann der $PM_{2,5}$-Wert berechnet werden, der dem Anteil der Aerosol-Partikel mit Durchmessern von kleiner als 2,5 pm entspricht. Diese Partikel sind lungengängig. Schließlich kann der $PM_{0,1}$-Wert berechnet werden, der ultrafeinen Partikeln mit Durchmessern von kleiner als 0,1 $\mu$m entspricht. Indem die genannten Parameter für die Massefraktionen bestimmter Aerosol-Partikel auf der Grundlage der von Feuchtigkeitseinflüssen bereinigten Partikelgrößenverteilung berechnet werden, lassen sich insbesondere präzisere Aussagen zur Feinstaub-Belastung des Aerosols treffen.

Der Gehalt der Wasser-Partikel kann insbesondere mathematisch durch einen Feuchtigkeitsparameter beschrieben werden, der dem Maß der Feuchtigkeitseinflüsse an der gemessenen Partikelgrößenverteilung entspricht. Beispielsweise kann als Feuchtigkeitsparameter die Differenz zwischen der gemessenen Partikelgrößenverteilung und der angepassten Partikelgrößenverteilung, vorzugsweise nur für Partikelgrößen innerhalb des Ziel-Größenintervalls, bestimmt werden, aus der der Anteil des Wasserkondensates an den Aerosol-Partikeln ableitbar ist.

Vorzugsweise erfolgt nach Bestimmung des Gehalts der Wasser-Partikel an den Aerosol-Partikeln die Bereinigung der gemessenen Partikelgrößenverteilung von Feuchtigkeitseinflüssen nur dann, wenn der Gehalt der Wasser-Partikel größer ist als ein vordefinierter Grenzwert, der insbesondere ein Grenzwert für den Feuchtigkeitsparameter ist. Beispielsweise beträgt ein derartiger Grenzwert für den Gehalt der Wasser-Partikel an den Aerosol-Partikeln 0,1 $\mu$g/m$^3$. Erfindungsgemäß kann vorgesehen sein, dass das Ziel-Größenintervall das Anpassungsintervall zumindest teilweise überlappt. Vorzugsweise sind sämtliche Partikel-Durchmesser des Ziel-Größenintervalls größer als die Partikel-Durchmesser des Anpassungsintervalls.

Vorzugsweise ist die Einrichtung des Aerosol-Messgeräts dazu geeignet, die oben genannten Verfahrensschritte durchzuführen.

Weiter vorzugsweise ist der Lichtstrahl der Lichtquelle des Aerosol-Messgeräts polychromatisches Licht, was gegenüber monochromatischem Licht eine präzisere Bestimmung der Partikelgrößenverteilung erlaubt. In einer weiteren Ausgestaltung weist der Lichtstrahl kohärentes Licht, insbesondere Laserlicht auf. Zur Detektion des Streulichts kann das Aerosol-Messgerät, insbesondere dessen Detektor, mindestens vier optische Kanäle aufweisen, die beispielsweise als optische Spektralkanäle ausgestaltet sind.

Weitere Vorteile und Merkmale ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigen:

Fig. 1      eine schematische Darstellung eines Aerosol-Messgeräts in einem zu messenden Aerosol;

Fig.2       ein schematischer Aufbau des Aerosol-Messgeräts der Fig. 1;

Fig.3       ein Ablaufdiagramm eines erfindungsgemäßen Verfahrens und

Fig. 4 bis 6    gemessene und angepasste Partikelgrößenverteilungen für verschiedene Aerosole.

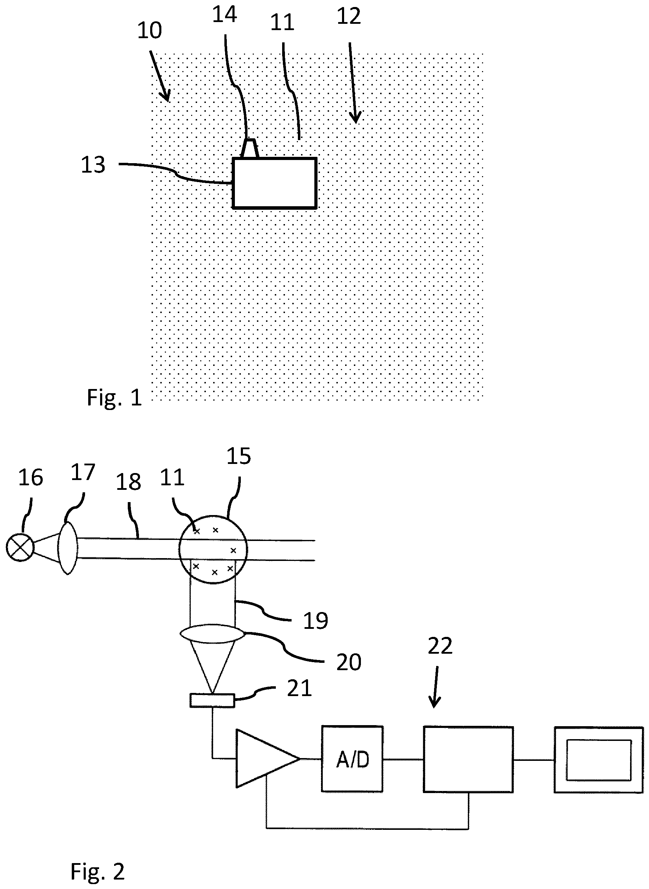

Fig. 1 zeigt in schematischer Darstellung ein Aerosol 10, das feste und flüssige Aerosol-Partikel 11 in einem Gas 12, beispielsweise Luft, enthält. Aerosol-Partikel 11 sind beispielsweise Wassertröpfchen, Rußpartikel, Materialabrieb, Pollen und/oder andere organische und chemische Stoffe.

Im Bereich des Aerosols 10 ist ein Aerosol-Messgerät 13 in Form eines Aerosol-Spektrometers angeordnet, das eine Partikelgrößenverteilung $c_n$ der Aerosol-Partikel 11 des Aerosols 10 in Abhängigkeit von deren Partikeldurchmessern $d_p$ misst. Die Aerosol-Partikel 11 werden hierzu über eine Zugangsöffnung 14 des Aerosol-Messgeräts 13 und über ein Durchflussrohr 15 mittels einer stromab angeordneten Pumpe (nicht dargestellt) hindurchgesaugt. Das Durchflussrohr 15 ist im skizzierten Aufbau des Aerosol-Messgeräts 13 gemäß Fig. 2 senkrecht zur Zeichenebene angeordnet.

Die Aerosol-Partikel 11 werden im Durchflussrohr 15 senkrecht zu ihrer Flugrichtung mit einem kollimierten Lichtstrahl 18 aus polychromatischen Licht einer Lichtquelle 16 und einer Linse 17 bestrahlt. Aufgrund der dadurch stattfindenden Streuprozesse senden die Aerosol-Partikel 11 Streulicht 19 ab, das senkrecht zur Flugrichtung der Aerosol-Partikel 11 und senkrecht zur Bestrahlungsrichtung des Lichts aus der Lichtquelle 16 auf eine Sammellinse 20 trifft. Die Sammellinse 20 fokussiert das Streulicht 19 auf einen optoelektrischen Sensor 21, der das Streulicht 19 in elektrische Signale umwandelt. Eine elektronische Verarbeitungseinheit 22 bestimmt aus den elektrischen Signalen die Partikelgrößenverteilung $c_n$ in Abhängigkeit von den Partikeldurchmessern $d_p$ der Aerosol-Partikel 11. Die räumliche Überlappung des Lichtstrahls 18, des gemessenen Streulichts 19 und des erfassten Teils der Aerosol-Partikel 11 im Durchflussrohr 15 definiert eine virtuelle räumliche Messzelle 23, in der die Partikelgrößenverteilung $c_n$ bestimmt wird.

Bei der Messung ist die Lichtintensität des Streulichts 19 und damit auch die hierdurch bedingte elektrische Signalstärke ein Maß für die Partikelgröße der Aerosol-Partikel 11, der dementsprechend ein Partikeldurchmesser $d_p$ zugeordnet wird. Die gemessene Partikelgrößenverteilung $c_n$ ist abhängig vom Partikeldurchmesser $d_p$, so dass gilt: $c_n = f(d_p)$.

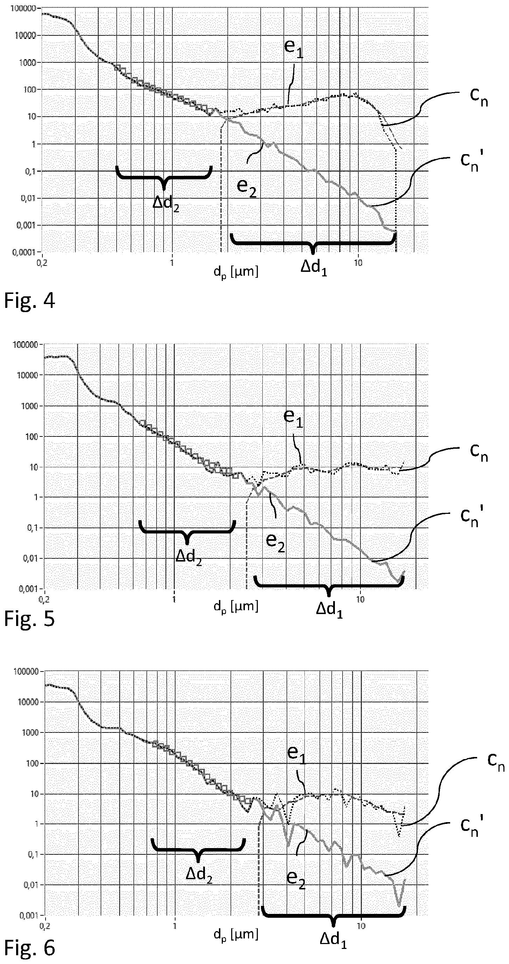

Wenngleich in den Messungen die Partikelgrößenverteilung $c_n$ stets für diskrete Partikeldurchmesser $d_p$ als Messpunkte bestimmt wird, wobei in der Regel bis zu 256 Kanäle verwendet werden, wird der Verlauf der gemessenen Partikelgrößenverteilung $c_n$ zwischen den Messpunkten bei der Auswertung in der elektronischen Verarbeitungseinheit 22 derart interpoliert, dass sich ein kontinuierlicher Verlauf ergibt, wie dies in den Fig. 4 bis 6 dargestellt ist. Dort sind gemessene Partikelgrößenverteilungen $c_n$ als fein gepunktete Kurven gegen den Partikeldurchmesser $d_p$ aufgetragen einschließlich eines

Bereichs $e_1$, der die Feuchtigkeitseinflüsse wiedergibt. In den Fig. 4 bis 6 sind außerdem Standard-Partikelgrößenverteilungen $c_n'$ trockener Aerosol-Partikel 11, also ohne Feuchtigkeitseinflüsse, dargestellt. Es ist erkennbar, dass die Feuchtigkeitseinflüsse auf die Partikelgrößenverteilung $c_n$ innerhalb eines weiter unten beschriebenen Anpassungsintervalls $\Delta d_2$ für Partikeldurchmesser $d_p$ zwischen 0,2 pm und maximal 3 µm vernachlässigbar sind. In einem ebenfalls weiter unten beschriebenen Ziel-Größenintervall $\Delta d_1$, das Partikeldurchmesser $d_p$ von 3 pm bis 50 pm umfasst, sind dagegen die Feuchtigkeitseinflüsse auf die Partikelgrößenverteilung $c_n$ erheblich, wobei die Fig. 4 bis 6 aus Übersichtsgründen nur den Verlauf für Partikeldurchmesser $d_p$ zwischen 0,2 µm und 20 µm in einer doppelt logarithmischen Skala zeigen. Es kann daher geschlossen werden, dass Wasserpartikel des Aerosols 10 größenmäßig überwiegend im Ziel-Größenintervall $\Delta d_1$ liegen.

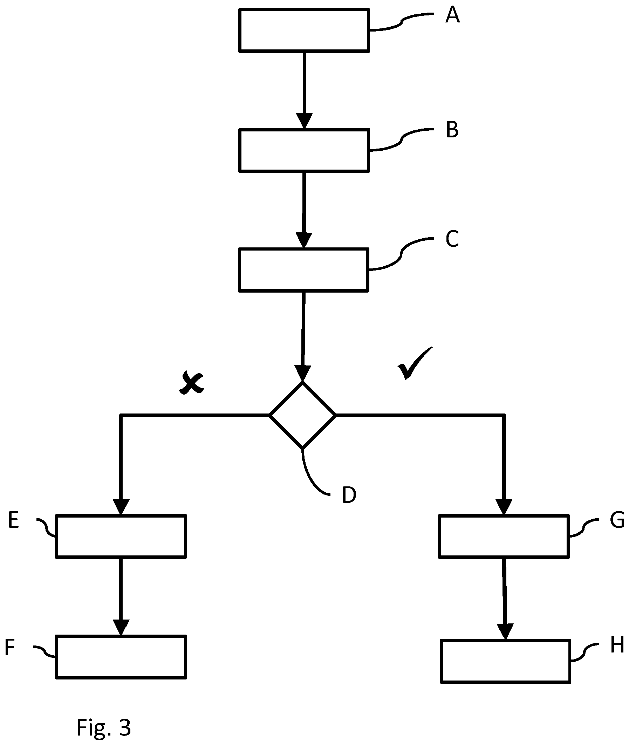

Im Folgenden wird anhand der Fig. 3 eine Ausgestaltung des erfindungsgemäßen Verfahrens beschrieben: In einem ersten Verfahrensschritt A wird die Partikelgrößenverteilung $c_n$ mittels des Aerosol-Messgeräts 13 in bereits beschriebener Weise bestimmt. Die Partikelgrößenverteilung $c_n$ weist Feuchtigkeitseinflüsse auf, was auch in den Fig. 4 bis 6 gezeigt ist.

In einem zweiten Verfahrensschritt B wird eine bereits vorhandene, parametrisierbare Standard-Partikelgrößenverteilung $c_n'$ für trockene Partikel, also mit vernachlässigbaren Feuchtigkeitseinflüssen, an die gemessene Partikelgrößenverteilung $c_n$ angepasst, was mathematisch auch als Anfitten bzw. Fitting bezeichnet wird. Die Standard-Partikelgrößenverteilung $c_n'$ ist von mindestens einem Fitting-Parameter $\alpha_1$ abhängig, der solange variiert wird, bis eine hinreichende Übereinstimmung der Standard-Partikelgrößenverteilung $c_n'$ mit der gemessenen Konzentrationsverteilung $c_n$ besteht. Die Anpassung erfolgt dabei ausschließlich für Stützstellen der Partikeldurchmesser $d_p$ im Anpassungsintervall $\Delta d_2$, also zwischen 0,1 µm und 3 µm. Die diskreten Stützstellen sind in den Fig. 4 bis 6 als Quadrate dargestellt.

Als Standard-Partikelgrößenverteilung $c_n'$ wird eine Junge-Verteilung für trockene Aerosole 10 verwendet, die keine Feuchtigkeitseinflüsse aufweist und die wie folgt beschrieben ist:

$$\frac{dc_n}{d\log r} = r^{-\nu}$$

r ist dabei der Radius der Aerosol-Partikel 11, so dass gilt: $r = d_p/2$. Die Standard-Partikelgrößenverteilung $c_n'$ ist daher abhängig von der Potenz $\nu$ des Partikeldurchmessers $d_p$, wobei $\nu$ Werte zwischen -10 und -0,1 aufweist und demnach als Fitting-Parameter $\alpha_1$ dient. Alternativ können auch vordefinierte und/oder bereits abgespeicherte, gemessene Standard-Partikelgrößenverteilungen $c_n'$ verwendet werden, die aber jedenfalls keine nennenswerten Feuchtigkeitseinflüsse aufweisen dürfen.

Zur Beurteilung einer ausreichend guten Anpassung wird insbesondere ein Fehlerparameter β für die Güte des Fittings berechnet, der bei einer optimalen Anpassung minimiert ist. Ein derartiger Fehlerparameter β ist beispielsweise der RMS-Wert, der als Mittelwert der quadratischen Abweichung der Standard-Partikelgrößenverteilung $c_n$' von der gemessenen Partikelgrößenverteilung $c_n$ definiert ist (Root mean square). Im Ergebnis wird eine Standard-Partikelgrößenverteilung $c_n$' erhalten, die bestmöglich an die gemessene Partikelgrößenverteilung $c_n$ für Partikeldurchmesser $d_p$ im Anpassungsintervall $\Delta d_2$ angepasst ist. Diese Kurve ist jeweils in den Fig. 4 bis 6 der gemessenen Partikelgrößenverteilung $c_n$ angenähert und jeweils als durchgezogene Linie dargestellt, weist aber statt dem Bereich $e_1$ einen Bereich $e_2$ auf, der keine nennenswerten Feuchtigkeitseinflüsse wiedergibt.

In einem nächsten Verfahrensschritt C werden die Feuchtigkeitseinflüsse auf die gemessene Partikelgrößenverteilung $c_n$ in Form eines Feuchtigkeitsparameters γ bestimmt, wobei der Feuchtigkeitsparameter γ definiert ist als die Abweichung der angepassten Standard-Partikelgrößenverteilung $c_n$' von der gemessenen Partikelgrößenverteilung $c_n$ für Partikeldurchmesser $d_p$ im Ziel-Größenintervall $\Delta d_1$. Der Feuchtigkeitsparameter γ ist folglich ein Maß für die Fläche zwischen dem Bereich $e_1$ und dem Bereich $e_2$ der Fig. 4 und gibt den Anteil der Wasserkondensat-Partikel an den Aerosol-Partikeln 11 wieder.

Nachdem der Feuchtigkeitsparameter γ ermittelt wurde, wird in einem nächsten Verfahrensschritt D abgefragt, ob der Feuchtigkeitsparameter γ größer ist als ein vordefinierter Grenzwert $\gamma_{GW}$, wobei beispielsweise gilt $\gamma_{GW}$ = 0,001 Wasserkondensat-Partikel/cm³.

Ist der Feuchtigkeitsparameter γ kleiner als der Grenzwert $\gamma_{GW}$, liegt nur ein vernachlässigbarer Feuchtigkeitseinfluss auf die gemessene Partikelgrößenverteilung $c_n$ vor. In diesem Fall wären die Bereiche $e_1$ und $e_2$ der Fig. 4 bis 6 annähernd deckungsgleich und es wird mit einem nächsten Verfahrensschritt E fortgefahren, der in Fig. 3 auf der linken Seite dargestellt ist. Demnach werden die Werte der gemessenen Partikelgrößenverteilung $c_n$ für Partikeldurchmesser $d_p$ des ersten Größenintervalls $\Delta d_1$ bereitgestellt.

Anschließend wird in einem Verfahrensschritt F ein Parameter aus der gemessenen Partikelgrößenverteilung $c_n$ berechnet, der einer bestimmten Massefraktion der Aerosol-Partikel 11 entspricht. Dies ist beispielsweise der $PM_{2,5}$-Wert, der die Massefraktion aller Aerosol-Partikel 11 mit Partikeldurchmessern $d_p$ von kleiner als 2,5 pm am gesamten Aerosol 10 wiedergibt und ein Maß für die Feinstaub-Belastung des Aerosols 10 darstellt.

Ergibt die Abfrage nach Verfahrensschritt D, dass der Feuchtigkeitsparameter γ größer ist als der Grenzwert $\gamma_{GW}$, liegt ein nennenswerter Feuchtigkeitseinfluss auf die gemessene Partikelgrößenverteilung $c_n$ vor. Dieser Fall ist jeweils in den Fig. 4 bis 6 dargestellt. Es wird in diesem Fall mit einem nächsten Verfahrensschritt G fortgefahren, der in Fig. 3 auf der rechten Seite dargestellt ist. Dort wird die angepasste Standard-Partikelgrößenverteilung $c_n$' für Partikeldurchmesser $d_p$ des ersten Größenintervalls $\Delta d_1$ durch Extrapolation bereitgestellt, deren Werte keinen Feuchtigkeitseinflüssen unterliegen. Auf diese Weise wurden die Feuchtigkeitseinflüsse bereinigt. In den Fig. 4 bis 6 ist jeweils als gestrichelte Linie ein modellhafter Verlauf der Partikelgrößenverteilung für die Wasserpartikel des Aerosols dargestellt, der annähernd deckungsgleich ist mit den jeweils gemessenen Partikelgrößenverteilungen $c_n$ der Fig. 4 bis 6 im Bereich des ersten Größenintervalls $\Delta d_1$.

Schließlich wird in einem letzten Verfahrensschritt H aus der Standard-Partikelgrößenverteilung $c_n$' der bereits beschriebene $PM_{2,5}$-Wert ermittelt. Der $PM_{2,5}$-Wert ist damit ebenfalls von Feuchtigkeitseinflüssen bereinigt. Damit kann die reine Feinstaub-Belastung des Aerosols 10 trotz vorhandener Wasser-Partikel zuverlässig bestimmt werden.

**Patentansprüche**

1.  Verfahren zum Bestimmen der Partikelgrößenverteilung ($c_n$) eines Aerosols (10) mittels eines Aerosol-Messgeräts (13), wobei Aerosol-Partikel (11) des durch eine Messzelle (23) strömenden Aerosols (10) in der Messzelle (23) mit einem Lichtstrahl (18) beleuchtet, Streulicht (19) von einem Sensor (21) aufgenommen und Streulichtsignale (19) der Aerosol-Partikel (11) intensitätsmäßig spektroskopisch erfasst werden, sowie eine für eine Partikelgrößenverteilung ($c_n$) repräsentative Größenverteilung der Streulichtsignale (19) erstellt wird, wobei eine bekannte Standard-Partikelgrößenverteilung ($c_n$') trockener Aerosol-Partikel an die gemessene Partikelgrößenverteilung ($c_n$) angepasst und derart die gemessene Partikelgrößenverteilung ($c_n$) von Feuchtigkeitseinflüssen bereinigt wird, und wobei nach der Anpassung der Standard-Partikelgrößenverteilung (cn') der Gehalt der Wasser-Partikel an den Aerosol-Partikeln (11) aus der angepassten Partikelgrößenverteilung (cn') in Kombination mit der gemessenen Partikelgrößenverteilung (cn) bestimmt wird .

2.  Verfahren nach Anspruch 1, **dadurch gekennzeichnet, dass** die Anpassung der Standard-Partikelgrößenverteilung ($c_n$') an die gemessene Partikelgrößenverteilung ($c_n$) nur für Partikelgrößen innerhalb eines Anpassungsintervalls ($\Delta d_2$) erfolgt.

3.  Verfahren nach Anspruch 2, **dadurch gekennzeichnet, dass** das Anpassungsintervall ($\Delta d_2$) Partikelgrößen mit Durchmessern ($d_p$) bis maximal 3 pm umfasst.

4. Verfahren nach einem der vorangehenden Ansprüche 1 bis 3, **dadurch gekennzeichnet, dass** die Standard-Partikelgrößenverteilung ($c_n$') aus bereits gemessenen Partikelgrößenverteilungen ($c_n$) bestimmt wird.

5. Verfahren nach einem der vorangehenden Ansprüche 1 bis 3, **dadurch gekennzeichnet, dass** die Standard-Partikelgrößenverteilung ($c_n$') eine mathematisch modellierte Partikelgrößenverteilung ist, die insbesondere abhängig ist von einer Potenz ($v$) des Partikeldurchmessers ($d_p$), wobei insbesondere die Potenz ($v$) einen Wert zwischen - 10 und -0,1 aufweist und wobei insbesondere die Standard-Partikelgrößenverteilung ($c_n$') beschrieben ist durch

$$\frac{dc_n}{d\log r} = r^{-v}$$
, wobei v einen Wert zwischen - 10 und -0,1 aufweist.

6. Verfahren nach einem der vorangehenden Ansprüche, **dadurch gekennzeichnet, dass** aus der angepassten Partikelgrößenverteilung ($c_n$'), insbesondere in Kombination mit der gemessenen Partikelgrößenverteilung ($c_n$), ein Parameter berechnet wird, der einer Massefraktion der Aerosol-Partikel (11) am Aerosol (10) entspricht.

7. Verfahren nach einem der Ansprüche 1 bis 6, **dadurch gekennzeichnet, dass** nach Bestimmung des Gehalts der Wasser-Partikel an den Aerosol-Partikeln (11) die Bereinigung der gemessenen Partikelgrößenverteilung ($c_n$) von Feuchtigkeitseinflüssen nur dann erfolgt, wenn der Gehalt der Wasser-Partikel größer ist als ein vordefinierter Grenzwert ($\gamma_{GW}$).

8. Aerosol-Messgerät (13) zur Bestimmung der Partikelgrößenverteilung ($c_n$) eines Aerosols (10), wobei Aerosol-Partikel (11) des Aerosols (10) in einer Messzelle (23) derart angeordnet sind, dass die Aerosol-Partikel (11) von einem Lichtstrahl (18) beleuchtbar sind, wobei Streulicht (19) der Aerosol-Partikel (11) von einem Sensor (21) aufnehmbar und Streulichtsignale (19) der Aerosol-Partikel (11) intensitätsmäßig spektroskopisch erfassbar sind, so dass eine für eine Partikelgrößenverteilung ($c_n$) repräsentative Größenverteilung der Streulichtsignale (19) erstellbar ist, wobei eine Einrichtung des Aerosol-Messgeräts (13) derart ausgestaltet ist, dass eine bekannte Standard-Partikelgrößenverteilung ($c_n$') trockener Aerosol-Partikel an die gemessene Partikelgrößenverteilung ($c_n$) anpassbar und derart die gemessene Partikelgrößenverteilung ($c_n$) von Feuchtigkeitseinflüssen bereinigbar ist, wobei die Einrichtung dazu geeignet ist, die Schritte eines Verfahrens nach den Ansprüchen 1 bis 7 durchzuführen.

9. Aerosol-Messgerät nach Anspruch 8, **dadurch gekennzeichnet, dass** der Lichtstrahl (18) der Lichtquelle (16) polychromatisches Licht ist.

10. Aerosol-Messgerät nach einem der Ansprüche 8 oder 9, **dadurch gekennzeichnet, dass** der Lichtstrahl (18) der Lichtquelle (16) kohärentes Licht aufweist.

11. Aerosol-Messgerät nach einem der Ansprüche 8 bis 10, **dadurch gekennzeichnet, dass** das Aerosol-Messgerät (13) mindestens vier optische Kanäle, insbesondere optische Spektralkanäle, aufweist zur Detektion des Streulichts (19).

12. Computerprogramm mit Befehlen, die bewirken, dass das Aerosol-Messgerät (13) nach einem der Ansprüche 8 bis 11 die Verfahrensschritte nach einem der Ansprüche 1 bis 7 ausführt.

13. Computerlesbares Medium, auf dem das Computerprogramm nach Anspruch 12 gespeichert ist.

**Claims**

1. A method for determining the particle size distribution ($c_n$) of an aerosol (10) by means of an aerosol measuring instrument (13), wherein aerosol particles (11) of the aerosol (10) flowing through a measuring cell (23) are illuminated in the measuring cell (23) by means of a light beam (18), scattered light (19) is recorded by a sensor (21), and the intensity of scattered light signals (19) of the aerosol particles (11) is detected by means of spectroscopy, and a size distribution of the scattered light signals (19) representative of a particle size distribution ($c_n$) is established, wherein a known standard particle size distribution ($c_n$') of dry aerosol particles is adjusted to the measured particle size distribution ($c_n$) and, in this way, the influence of moisture is eliminated from the measured particle size distribution ($c_n$), and wherein, after the standard particle size distribution ($c_n$') has been adjusted, the content of water particles in the aerosol particles (11) is determined from the adjusted particle size distribution ($c_n$') in combination with the measured particle size distribution ($c_n$).

2. The method according to claim 1, **characterized in that** the standard particle size distribution ($c_n$') is only adjusted to the measured particle size distribution ($c_n$) for particle sizes within an adjustment interval ($\Delta d_2$).

3. The method according to claim 2, **characterized in**

**that** the adjustment interval ($\Delta d_2$) comprises particle sizes with diameters ($d_p$) of up to a maximum of 3 $\mu$m.

4. The method according to any of the preceding claims 1 to 3, **characterized in that** the standard particle size distribution ($c_n'$) is determined from already measured particle size distributions ($c_n$).

5. The method according to any of the preceding claims 1 to 3, **characterized in that** the standard particle size distribution ($c_n'$) is a mathematically modeled particle size distribution which is dependent, in particular, on a power (v) of the particle diameter ($d_p$), the power (v) in particular having a value of between -10 and -0.1, and the standard particle size distribution ($c_n'$) in particular being described by

$$\frac{dc_n}{d \log r} = r^{-\nu}$$

, v having a value of between -10 and -0.1.

6. The method according to any of the preceding claims,
   **characterized in that** a parameter which corresponds to a mass fraction of the aerosol particles (11) in the aerosol (10) is calculated from the adjusted particle size distribution ($c_n'$), in particular in combination with the measured particle size distribution ($c_n$).

7. The method according to any of claims 1 to 6, **characterized in that,** after the content of water particles in the aerosol particles (11) has been determined, the influence of moisture is only eliminated from the measured particle size distribution ($c_n$) if the content of water particles is greater than a predefined limit value ($\gamma_{GW}$).

8. An aerosol measuring instrument (13) for determining the particle size distribution ($c_n$) of an aerosol (10), wherein aerosol particles (11) of the aerosol (10) are arranged in a measuring cell (23) such that the aerosol particles (11) can be illuminated by a light beam (18), wherein scattered light (19) of the aerosol particles (11) can be recorded by a sensor (21), and the intensity of scattered light signals (19) of the aerosol particles (11) can be detected by means of spectroscopy, such that a size distribution of the scattered light signals (19) representative of a particle size distribution ($c_n$) can be established, wherein a device of the aerosol measuring instrument (13) is configured such that a known standard particle size distribution ($c_n'$) of dry aerosol particles can be adjusted to the measured particle size distribution ($c_n$) and, in this way, the influence of moisture can be eliminated from the measured particle size distribution ($c_n$), wherein the device is suitable for carrying out the steps of a method according to claims 1 to 7.

9. The aerosol measuring instrument according to claim 8,
   **characterized in that** the light beam (18) of the light source (16) is polychromatic light.

10. The aerosol measuring instrument according to either of claims 8 or 9, **characterized in that** the light beam (18) of the light source (16) comprises coherent light.

11. The aerosol measuring instrument according to any of claims 8 to 10, **characterized in that** the aerosol measuring instrument (13) comprises at least four optical channels, in particular optical spectral channels, for detecting the scattered light (19).

12. A computer program comprising commands that prompt the aerosol measuring instrument (13) according to any of claims 8 to 11 to perform the method steps according to any of claims 1 to 7.

13. A computer-readable medium on which the computer program according to claim 12 is stored.

**Revendications**

1. Procédé permettant de déterminer la distribution de tailles de particules ($c_n$) d'un aérosol (10) au moyen d'un appareil de mesure d'aérosol (13), dans lequel des particules d'aérosol (11) de l'aérosol (10) circulant à travers une cellule de mesure (23) sont éclairées avec un faisceau lumineux (18) dans la cellule de mesure (23), de la lumière diffusée (19) étant reçue par un capteur (21) et des signaux de lumière diffusée (19) des particules d'aérosol (11) étant détectés par spectroscopie en termes d'intensité, et une distribution de tailles des signaux de lumière diffusée (19) représentant une distribution de tailles de particules ($c_n$) étant établie, une distribution de tailles de particules standard ($c_n'$) connue de particules d'aérosol sèches étant adaptée à la distribution de tailles de particules ($c_n$) mesurée et ainsi des effets de l'humidité étant éliminés de la distribution de tailles de particules ($c_n$) mesurée, et, après l'adaptation de la distribution de tailles de particules standard ($c_n'$), la teneur en particules d'eau des particules d'aérosol (11) étant déterminée à partir de la distribution de tailles de particules ($c_n'$) adaptée en combinaison avec la distribution de tailles de particules ($c_n$) mesurée.

2. Procédé selon la revendication 1, **caractérisé en ce que** l'adaptation de la distribution de tailles de particules standard ($c_n'$) à la distribution de tailles de

particules ($c_n$) mesurée n'est effectuée que pour des tailles de particules dans un intervalle d'adaptation ($\Delta d_2$).

3. Procédé selon la revendication 2, **caractérisé en ce que** l'intervalle d'adaptation ($\Delta d_2$) comprend des tailles de particules comportant des diamètres ($d_p$) d'au plus 3 $\mu$m.

4. Procédé selon l'une des revendications précédentes 1 à 3, **caractérisé en ce que** la distribution de tailles de particules standard ($c_n$') est déterminée à partir de distributions de tailles de particules ($c_n$) déjà mesurées.

5. Procédé selon l'une des revendications précédentes 1 à 3, **caractérisé en ce que** la distribution de tailles de particules standard ($c_n$') est une distribution de tailles de particules modélisée mathématiquement qui dépend en particulier d'une puissance (v) du diamètre de particules ($d_p$), la puissance (v) présentant en particulier une valeur comprise entre -10 et -0,1 et la distribution de tailles de particules standard ($c_n$')

étant en particulier décrite par $$\frac{dc_n}{d \log r} = r^{-\nu}$$, v présentant une valeur comprise entre -10 et -0,1.

6. Procédé selon l'une des revendications précédentes, **caractérisé en ce qu'**un paramètre correspondant à une fraction massique des particules d'aérosol (11) dans l'aérosol (10) est calculé à partir de la distribution de tailles de particules ($c_n$') adaptée, en particulier en combinaison avec la distribution de tailles de particules ($c_n$) mesurée.

7. Procédé selon l'une des revendications 1 à 6, **caractérisé en ce que,** après la détermination de la teneur en particules d'eau des particules d'aérosol (11), l'élimination d'effets de l'humidité de la distribution de tailles de particules ($c_n$) mesurée n'est effectuée que si la teneur en particules d'eau est supérieure à une valeur limite prédéfinie ($\gamma_{GW}$).

8. Appareil de mesure d'aérosol (13) permettant de déterminer la distribution de tailles de particules ($c_n$) d'un aérosol (10), dans lequel des particules d'aérosol (11) de l'aérosol (10) sont disposées dans une cellule de mesure (23) de telle sorte que les particules d'aérosol (11) peuvent être éclairées par un faisceau lumineux (18), de la lumière diffusée (19) des particules d'aérosol (11) pouvant être reçue par un capteur (21) et des signaux de lumière diffusée (19) des particules d'aérosol (11) pouvant être détectés par spectroscopie en termes d'intensité, de sorte qu'une distribution de tailles des signaux de lumière diffusée (19) représentant une distribution de tailles de particules ($c_n$) peut être établie, un dispositif de l'appareil de mesure d'aérosol (13) étant configuré de telle sorte qu'une distribution de tailles de particules standard ($c_n$') connue de particules d'aérosol sèches peut être adaptée à la distribution de tailles de particules ($c_n$) mesurée et ainsi des effets de l'humidité peuvent être éliminés de la distribution de tailles de particules ($c_n$) mesurée, le dispositif étant apte à exécuter les étapes d'un procédé selon les revendications 1 à 7.

9. Appareil de mesure d'aérosol selon la revendication 8, **caractérisé en ce que** le faisceau lumineux (18) de la source lumineuse (16) est une lumière polychromatique.

10. Appareil de mesure d'aérosol selon l'une des revendications 8 ou 9, **caractérisé en ce que** le faisceau lumineux (18) de la source lumineuse (16) présente une lumière cohérente.

11. Appareil de mesure d'aérosol selon l'une des revendications 8 à 10, **caractérisé en ce que** l'appareil de mesure d'aérosol (13) présente au moins quatre canaux optiques, en particulier des canaux spectraux optiques, pour la détection de la lumière diffusée (19).

12. Programme informatique comportant des instructions qui amènent l'appareil de mesure d'aérosol (13) selon l'une des revendications 8 à 11 à réaliser les étapes de procédé selon l'une des revendications 1 à 7.

13. Support lisible par ordinateur sur lequel est stocké le programme informatique selon la revendication 12.

Fig. 1

Fig. 2

Fig. 3

Fig. 4

Fig. 5

Fig. 6

EP 3 814 744 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. B. LILEY.** Fitting Size Distributions to Optical Particle Counter Data. *AEROSOL SCIENCE AND TECHNOLOGY,* 01. Januar 1992, vol. 17 (2), 84-92